# EUROPÄISCHE PATENTSCHRIFT

(11) **EP 1 074 079 B1**
(45) Veröffentlichungstag und Bekanntmachung des Hinweises auf die Patenterteilung: **06.03.2002**
(21) Anmeldenummer: 99945738.5
(22) Anmeldetag: 09.04.1999
(51) Int. Cl.: H02H 3/33

(54) **SCHUTZSCHALTGERÄT**
POWER CIRCUIT-BREAKER
DISJONCTEUR

(30) Priorität: 22.04.1998 DE 19818054
(43) Veröffentlichungstag der Anmeldung: 07.02.2001
(73) Patentinhaber: SIEMENS AKTIENGESELLSCHAFT, 80333 München (DE)
(72) Erfinder: BAUER, Bernhard, D-93053 Regensburg (DE); SCHMID, Reinhard, D-93051 Regensburg (DE)
(86) Internationale Anmeldenummer: DE9901074
(87) Internationale Veröffentlichungsnummer: WO9954977

(56) Entgegenhaltungen:
- EP-A- 0 220 408
- EP-A- 0 655 820
- US-A- 4 001 646

## Beschreibung

Die Erfindung bezieht sich auf ein Schutzschaltgerät, insbesondere auf einen Differenzstrom-Schutzschalter, mit einem ein Leitungsnetz überwachenden Summenstromwandler, der über einen Auslösekreis und eine Auslöseschaltung einen mit einem Schaltschloss zur Betätigung eines Leistungsschalters gekoppelten Auslöser ansteuert.

Ein derartiges Schutzschaltgerät ist bekannt (US-A-4 001 646). Es dient zur Sicherstellung des Schutzes gegen einen gefährlichen Körperstrom in einer elektrischen Anlage. Dies ist beispielsweise dann der Fall, wenn eine Person ein spannungsführendes Teil einer elektrischen Anlage berührt. Der Fehlerstrom fließt dann über die Person als Körperstrom gegen Erde ab. Der zum Schutz gegen gefährliche Körperströme eingesetzte Schutzschalter trennt bei Überschreiten des sogenannten Bemessungsfehlerstromes sicher und schnell die betroffenen Stromkreise vom Netz.

Der Aufbau eines Schutzschalters ist allgemein beispielsweise aus "etz", Band 107 (1986), Heft 20, Seiten 938 bis 945, bekannt. Dort sind insbesondere in den Bildern 1 bis 3 Prinzipschaltbilder und Funktionsprinzipien eines FehlerstromSchutzschalters (FI-Schutzschalter) und eines Differenzstrom-Schutzschalters (DI-Schutzschalter) dargestellt.

Der FI- und der DI-Schutzschalter sind in ähnlicher Art und Weise aus drei Baugruppen aufgebaut. Ein Summenstromwandler, durch dessen Wandlerkern alle stromführenden Leiter eines Leitungsnetzes geführt sind, induziert in dessen Sekundärwicklung im Falle eines Fehlerstroms ein Spannungssignal, das einen mit der Sekundärwicklung verbundenen Auslöser ansteuert. Der Auslöser ist seinerseits mit einem Schaltschloss gekoppelt, über das bei Ansprechen des Auslösers die Kontakte eines in der oder jeder Leitung liegenden Leistungsschalters geöffnet werden. Dabei entnimmt der FI-Schutzschalter die zur Auslösung notwendige Energie netzspannungsunabhängig aus dem Fehlerstrom selbst, während beim DI-Schutzschalter die Auslösung netzspannungsabhängig erfolgt. Dazu wird dem DI-Auslösekreis des DI-Schalters oder DI-Zusatzes bei Auftreten eines Fehlerstroms im vom Leitungsnetz gespeisten elektrischen Schaltkreis das vom Summenstromwandler abgegebene Signal mittels einer hilfsenergieabhängigen Elektronikeinheit verstärkt zugeführt.

Zur Überprüfung der Funktionsfähigkeit eines derartigen Schutzschaltgerätes oder Schutzschalters ist eine Prüfeinrichtung mit einem Prüftaster vorgesehen, der üblicherweise zwischen den Nulleiter (N) und einen Phasenleiter (L1,L2,L3) des Leitungsnetzes geschaltet ist. Durch Drücken der Prüftaste wird ein Fehlerstrom simuliert und die Reaktion des Schutzschalters geprüft. Dabei muss im funktionsfähigen Zustand der Schutzschalter praktisch unverzögert auslösen.

Des weiteren ist häufig bei derartigen Schutzschaltern eine Fernauslösung vorgesehen, über die - beispielsweise für eine Freischaltung - der Schutzschalter und damit der mit diesem gekoppelte Leistungsschalter extern betätigt werden können. Zur Realisierung einer Fernauslösung beim DI-Schutzschalter kann entweder über eine an diesen geführte Fernauslöseleitung ein Schließkontakt parallel zum Prüfkontakt geschaltet werden. Eine weitere Möglichkeit besteht darin, am Summenstromwandler zusätzlich zur Prüfwicklung eine separate Wicklung vorzusehen, die über einen Strombegrenzungswiderstand bei Betätigung eines Fernauslöseschalters zwischen zwei Außenleiter oder zwischen einen Phasenleiter und den Null-Leiter geschaltet wird. Diese beiden Varianten zur Fernauslösung erfordern jedoch in nachteiliger Weise einerseits zusätzlich mindestens einen Hilfskontakt. Andererseits sind die Zuleitungen zum Fernauslöseschalter und der Schalterkontakt der Fernauslösung besonders spannungsfest auszulegen.

Bei einem DI-Zusatz für Leistungsschalter kommt erschwerend hinzu, dass aufgrund des im Leistungsschalter untergebrachten Schaltstrecken keine Hilfskontakte realisierbar sind. Da derartige Schutzschalter auch dreipolig ausgeführt werden, wäre zudem ein Anschluss zwischen zwei Außenleitern erforderlich. Ferner besteht eine Besonderheit bei DI-Schutzschaltern oder -zusätzen darin, dass häufig Auslösezeitverzögerungen bis zu einer Sekunde eingestellt werden können. Würde daher nach den genannten Varianten die Fernauslösung betätigt, müsste - abhängig von der eingestellten Zeitverzögerung - eine relativ lange Auslösezeit berücksichtigt werden. Dies ist im Hinblick auf eine Notausschaltung jedoch nicht vertretbar.

Der Erfindung liegt daher die Aufgabe zugrunde, ein Schutzschaltgerät anzugeben, das in einfacher und zuverlässiger Art und Weise fernauslösbar ist.

Diese Aufgabe wird erfindungsgemäß gelöst durch die Merkmale des Anspruchs 1. Dazu ist eine Auslöseschaltung vorgesehen, die den Auslöser bei einer Fernauslösung ansteuert.

Die Auslöseschaltung umfasst einen eine Primärwicklung und eine Sekundärwicklung aufweisenden Übertrager, der primärseitig über eine Ansteuerschaltung mit dem Auslöser verbunden ist. Bei einer Ansteuerung des Übertragers, vorzugsweise durch Kurzschließen dessen Sekundärwicklung, erzeugt die Auslöseschaltung auf der Primärseite des Übertragers ein Steuersignal für den Auslöser.

Die Auslöseschaltung weist zweckmäßigerweise zusätzlich einen Oszillator in Form eines Rechteckgenerators auf, der auf die Primärwicklung des Übertragers arbeitet. Um dabei die Stromaufnahme des Rechteckgenerators oder -oszillators möglichst gering zu halten, wird einerseits die Frequenz möglichst hoch gewählt, da der induktive Widerstand der Primärwicklung des Übertragers proportional mit der Frequenz zunimmt. Da andererseits die an den Übertrager angeschlossene Leitung zur Fernauslösung aufgrund der parasitären Kapazität zwischen den Leiteradern mit zunehmender Frequenz eine zunehmend niederohmig werdende Impedanz bewirkt, wird zweckmäßigerweise die Frequenz zwischen 500Hz und 5kHz eingestellt. Diese Frequenzwerte sind optimiert auf eine vorausgesetzte Primärinduktivität des Übertragers von größer oder gleich 1 Henry und einer Leitungslänge zwischen dem Übertrager und einem Fernauslöseschalter von kleiner oder gleich 300m.

In zweckmäßiger Ausgestaltung weist die Auslöseschaltung einen primärseitig mit dem Übertrager verbundenen Komparator auf, der ausgangsseitig mit der Ansteuerschaltung des Auslösers verbunden ist. Dadurch kann eine Ansprechschwelle für den Auslöser bei einer Fernauslösung eingestellt werden, indem zur Erzeugung eines entsprechenden Ansteuersignals das primärseitige Signal des Übertragers mit einem Referenzsignal verglichen wird.

Zur Begrenzung des Stromflusses über die Primärwicklung des Übertragers bei kurzgeschlossener Sekundärwicklung ist innerhalb der Auslöseschaltung auf der Primärseite des Übertragers dem Komparator ein ohm'scher Widerstand nachgeschaltet. Dies ist insbesondere dann von Vorteil, wenn die Stromversorgung der Auslöseschaltung nach einer Fernauslösung unter Spannung steht. Im Hinblick auf eine minimale Stromaufnahme ist zweckmäßigerweise ein Widerstand mit größer oder gleich 10kΩ besonders zweckmäßig.

Die zur Erzeugung des Referenzsignals innerhalb der Auslöseschaltung vorgesehene Referenzsignalquelle weist in vorteilhafter Ausgestaltung einen Referenzspannungsteiler auf, der in Serienschaltung mit einer Zenerdiode an eine Versorgungsspannung angeschlossen ist. Dadurch wird erreicht, dass die Referenzspannung solange Null ist, wie beim Zuschalten der Versorgungsspannung die ansteigende Betriebsspannung unterhalb der Ansprechspannung der Zenerdiode bleibt. Die Referenzspannung sinkt dann infolge eines Abschaltens der Versorgungsspannung auf Null ab, wenn die absinkende Betriebsspannung die Ansprechspannung der Zenerdiode unterschreitet. Dadurch werden Fehlauslösungen durch eine Fernauslöse-Elektronik beim Einschalten und beim Ausschalten der Spannungsversorgung wirksam verhindert.

Um eine elektrostatische Aufladung der zur Fernauslösung an den Übertrager angeschlossenen Leitung zu verhindern, ist zweckmäßigerweise der Übertrager sekundärseitig über eine Reihenschaltung aus mindestens zwei ohm'schen Widerständen gegen Erdpotential geschaltet.

Die Ansteuerschaltung weist vorzugsweise einen Komparator auf, der ausgangsseitig über einen steuerbaren, elektronischen Schalter mit dem Auslöser verbunden ist. Der elektronische Schalter ist zweckmäßigerweise ein Transistor, dessen Steuereingang mit dem Komparator verbunden ist, und in dessen Kollektor-Emitterkreis die Auslöserelaisspule eines Auslöserelais geschaltet ist.

Die mit der Erfindung erzielten Vorteile bestehen insbesondere darin, dass durch eine auf der Sekundärseite eines Summenstromwandlers eines Schutzschaltgerätes auf dessen Auslöser wirkende Auslöseschaltung mit einem primärseitig mit dem Auslöser verbundenen Übertrager eine Fernauslösung ohne Hilfskontakt möglich ist. Zudem sind keine besonderen Anforderungen an die Spannungsfestigkeit der Fernauslöseleitung und des Fernauslöseschalters zu stellen. Da die Auslöseschaltung unmittelbar über die Ansteuerschaltung auf den Auslöser wirkt, erfolgt bei einem Schutzschalter mit Auslösezeitverzögerung die Ansteuerung bei einer Fernauslösung praktisch ohne Zeitverzögerung, so dass eine sichere Notausschaltung durch Fernauslösung des Schutzschalters gewährleistet ist.

Nachfolgend wird ein Ausführungsbeispiel der Erfindung anhand einer Zeichnung näher erläutert. Darin zeigen:
- FIG 1: schematisch den Aufbau eines DI-Schutzschalters mit einer Auslöseschaltung zur Fernauslösung, und
- FIG 2: den Schaltungsaufbau der Auslöseschaltung gemäß FIG 1.

Einander entsprechende Teile sind in beiden Figuren mit den gleichen Bezugszeichen versehen.

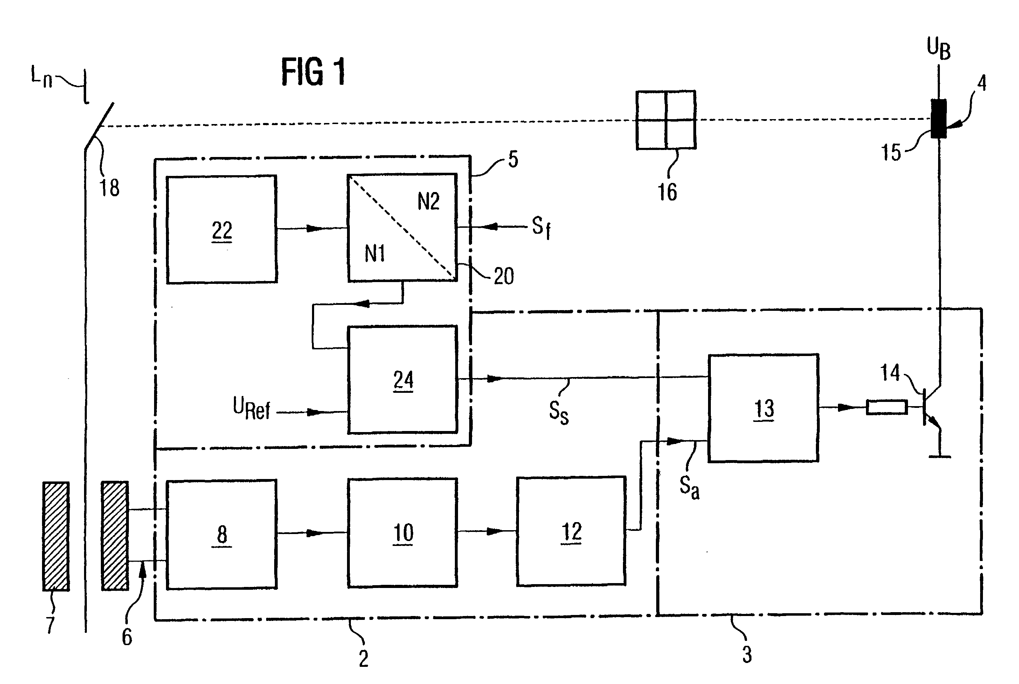

FIG 1 zeigt den prinzipiellen Funktionsaufbau des Differenzstrom-Schutzschalters als Schutzschaltgerät mit einem Auslösekreis 2 und mit einer von diesem gespeisten Ansteuerschaltung 3 für einen Auslöser 4 sowie mit einer Auslöseschaltung 5 für eine Fernauslösung. Der Auslösekreis 2 umfasst einen Summenstromwandler 6, durch dessen primärseitigen Wandlerkern 7 alle stromführenden Leitungen eines ein- oder mehrphasigen Leitungsnetzes Ln hindurchgeführt sind. Die Sekundärwicklung 8 des Summenstromwandlers 6 ist über einen elektronischen Verstärker 10 mit Gleichrichtung und einer diesem nachgeschalteten Auslösezeitverzögerung 12 mit einem Komparator 13 der Ansteuerschaltung 3 verbunden.

Der Komparator 13 ist ausgangsseitig an einen steuerbaren elektronischen Schalter geführt, der seinerseits mit dem Auslöser 4 verbunden ist. Der Schalter ist im Ausführungsbeispiel ein bipolarer npn-Transistor 14, dessen Basis vom Komparator 13 angesteuert wird, und in dessen an einer Betriebsspannung U_{B} liegenden Kollektor-Emitterkreis eine Auslöserelaisspule 15 des Auslösers 4 geschaltet ist. Der Auslöser 4 ist mit einer Mechanik in Form eines Schaltschlosses 16 gekoppelt, das auf einen in jeder Leitung des Leitungsnetzes Ln liegende Schaltstrecke eines Leistungsschalters 18 wirkt.

Im fehlerfreien Betrieb des DI-Schutzschalters ist die vektorielle Summe der im Leitungsnetz Ln zu- und abfließenden Ströme gleich Null. Tritt jedoch, beispielsweise aufgrund eines Isolationsfehlers in einem (nicht dargestellten) Verbrauchergerät, ein Fehlerstrom über Erde auf, so wird das Stromgleichgewicht im Summenstromwandler 6 gestört. Der Wandlerkern 7 wird entsprechend der Höhe des Fehlerstroms magnetisiert, so dass in der Sekundärwicklung 8 des Summenstromwandlers 6 eine Spannung induziert wird. Ein entsprechendes verstärktes, gleichgerichtetes und zeitlich verzögertes Auslösesignal Sₐ wird der Ansteuerschaltung 3 des Auslösers 4 zugeführt. Beim Ansprechen des Auslösers 4 werden über das Schaltschloss 16 die Schaltstrecken des Leistungsschalters 18 geöffnet und dadurch der schadhafte Anlagenteil abgeschaltet.

Der Auslöser 4 kann darüber hinaus mittels Fernauslösung angesteuert werden. Dazu umfasst die Auslöseschaltung 5 einen Übertrager 20 mit einer Primärwicklung N1 und einer Sekundärwicklung N2, über die die Auslöseschaltung 5 mittels eines Fernauslösesignals S_{f} aktivierbar ist. Ein Rechteckoszillator 22 wirkt auf die Primärwicklung N1 des Übertragers 20. Wird der Übertrager 20 sekundärseitig kurzgeschlossen, so bricht die Spannung an der Primärwicklung N1 des Übertragers 20 zusammen. Dies wird von einem mit dem Übertrager 20 primärseitig verbundenen Komparator 24 erfasst. Bei Überschreiten einer Referenzspannung U_{Ref} greift der Komparator 24 zur Ansteuerung der Auslöserelaisspule 15 des Auslösers 4 in den Auslösekreis 2 ein, indem die Auslöseschaltung 5 dem Komparator 13 der Ansteuerschaltung 3 ein entsprechendes Steuersignal Sₛ zuführt. Dabei erfolgt dieser Eingriff hinter dem Auslösekreis 2 und somit nach der Auslösezeitverzögerung 12, falls eine solche vorgesehen ist.

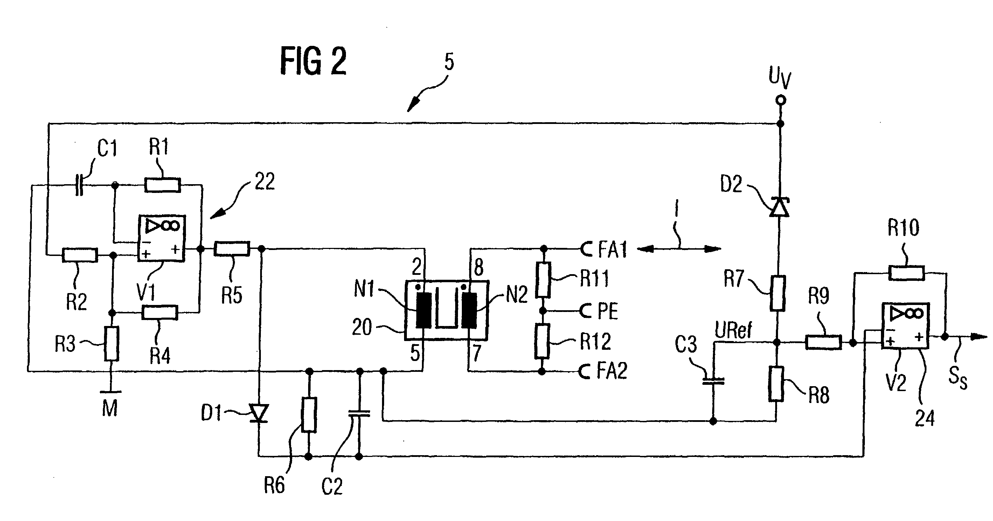

Den Aufbau der Auslöseschaltung 5 zur Fernauslösung zeigt FIG 2. Der Übertrager 20 weist einen der Sekundärwicklung N2 parallel geschalteten Spannungsteiler aus zwei ohm'schen Widerständen R11 und R12 auf, die gegen Erde PE geschaltet sind. Dies verhindert eine elektrostatische Aufladung der von der Fernauslösung an die Anschlüsse FA1 und FA2 angeschlossenen (nicht dargestellten) Fernauslöseleitung.

Der Anschluss der Fernauslösungsleitungen erfolgt an die Sekundärwicklung N2 des Übertragers 20 über Anschlüsse FA1 und FA2. Der an die Primärwicklung N1 angeschlossene Rechteckoszillator 22 ist durch einen Komparator V1 mit der dargestellten Beschaltung aus den Widerständen R1 bis R4 und dem Kondensator C1 gebildet. Die Frequenz f des Rechteckoszillators 22 wird durch entsprechende Dimensionierung der Zeitkonstante τ = R1xC1 eingestellt.

Um die Stromaufnahme des Oszillators 22 und damit der Auslöseschaltung 5 unter Berücksichtigung der aufgrund der parasitären Kapazität zwischen den Leiteradern der Fernauslöseleitungen mit zunehmender Frequenz f abnehmenden Impedanz (X_{C} = 1/2πfC) und unter Berücksichtigung des mit der Frequenz f zunehmenden induktiven Widerstands (X_{L} = 2πfL) der Primärwicklung N1 möglichst gering zu halten, wird die Frequenz f vorzugsweise zwischen 500 Hz und 5 kHz eingestellt. Dabei ist eine bei minimalem Bauvolumen des Übertragers 20 realisierbare Primärinduktivität L_{P} ≥ 1H und eine Leitungslänge 1 zwischen dem Übertrager 20 und einem (nicht dargestellten) Fernauslöseschalter von 1 ≤ 300m berücksichtigt.

Die Spannung an der Primärwicklung N1 des Übertragers 20 wird mittels einer Diode D1 und eines Kondensators C2 gleichgerichtet und geglättet. Wird die Sekundärwicklung N2 des Übertragers 20 infolge einer Fernauslösung kurzgeschlossen, so bricht die Spannung an der Primärwicklung N1 zusammen, und der Kondensator C2 wird über einen diesem parallel geschalteten Widerstand R6 entladen. Unterschreitet die Spannung am Kondensator C2 die Referenzspannung U_{Ref} des als invertierenden Komparator V2 mit Hysterese ausgeführten Komparators 24, so wechselt dessen Ausgang von Low-Pegel auf High-Pegel. Dazu ist der Komparator V2 mit den Widerständen R9, R10 und mit dem Kondensator C3 in der dargestellten Weise beschaltet. Der Pegelwechsel wird für die Steuerung der Ansteuerschaltung 3 genutzt, indem der Komparator V2 (24) das entsprechende Steuersignal S_{S} über den Komparator 13 dem basisseitigen Steuereingang des Transistor 14 zuführt. Dadurch wird der Transistor 14 leitend geschaltet, so dass die über dessen Kollektor-Emitterkreis an der Betriebsspannung U_{B} liegende Auslöserelaisspule 15 des Auslösers 4 stromdurchflossen ist.

Ein dem Komparator V1 des Rechteckoszillators 22 ausgangsseitig nachgeschalteter und in der Primärwicklung N1 des Übertragers 20 liegender Widerstand R5 begrenzt den Stromfluss über die Primärwicklung N1 bei kurzgeschlossener Sekundärwicklung N2 für den Fall, dass die Stromversorgung nach einer Fernauslösung unter Spannung steht. Im Hinblick auf eine minimale Stromaufnahme ist R5 ≥ 10kΩ zu wählen.

Die Referenzspannung U_{Ref} des Komparators V2 wird mittels eines an eine Versorgungsspannung Uᵥ angeschlossenen Referenzspannungsteilers R7,R8 erzeugt, der eine in Serie geschaltete Zenerdiode D2 enthält. Solange beim Zuschalten der Versorgungsspannung Uᵥ die ansteigende Betriebsspannung der Auslöseschaltung 5 unterhalb der Ansprechspannung der Zenerdiode D2 liegt, ist die Referenzspannung U_{Ref} = 0V. Beim Abschalten der Versorgungsspannung Uᵥ sinkt die Referenzspannung U_{Ref} auf 0V, wenn die absinkende Betriebsspannung der Auslöseschaltung 5 die Ansprechspannung der Zenerdiode D2 unterschreitet. Eine Fehlauslösung durch eine Fernauslöse-Elektronik beim Einschalten und beim Ausschalten der Versorgungsspannung Uᵥ wird dadurch wirksam verhindert.

Bei einer alternativen Betriebsweise des DI-Schutzschalters ist unter Verwendung eines Öffnerkontakts als Fernauslöseschalter der Übertrager 20 sekundärseitig kurzgeschlossen. Eine Unterschreitung der Referenzspannung U_{Ref} würde dann infolge einer Änderung des Steuersignals S_{S} des Komparators 24 (V2) der Auslöseschaltung 5 die Ansteuerung des Auslösers 4 bewirken.

## Patentansprüche

1. Schutzschaltgerät, insbesondere Differenzstrom-Schutzschalter, mit einem ein Leitungsnetz (Ln) überwachenden Summenstromwandler (6), der über einen Auslösekreis (2) und eine Ansteuerschaltung (3) einen mit einem Schaltschloss (16) zur Betätigung eines Leistungsschalters (18) gekoppelten Auslöser (4) ansteuert, **dadurch gekennzeichnet, dass** eine mittels eines Fernauslösesignals (S_{f}) auslösbare Auslöseschaltung (5) mit einem sekundärseitig ansteuerbaren Übertrager (20), der primärseitig mit einer Ansteuerschaltung (3) des Auslösers (4) zur Fernauslösung des Schutzschaltgerätes verbunden ist.

2. Schutzschaltgerät nach Anspruch 1, **dadurch gekennzeichnet, dass** die Auslöseschaltung (5) bei sekundärseitigem Kurzschluss des Übertragers (20) ein Steuersignal (S_{S}) für die Ansteuerschaltung (13) des Auslösers (4) erzeugt.

3. Schutzschaltgerät nach Anspruch 1 oder 2, **dadurch gekennzeichnet, dass** die Auslöseschaltung (5) einen mit dem Übertrager (20) primärseitig verbundenen Oszillator (22) umfasst.

4. Schutzschaltgerät nach Anspruch 3, **dadurch gekennzeichnet, dass** der Oszillator (22) ein Rechteckgenerator ist, dessen Frequenz (f) zwischen 500Hz und 5kHz eingestellt ist.

5. Schutzschaltgerät nach einem der Ansprüche 1 bis 4, **dadurch gekennzeichnet, dass** die Auslöseschaltung (5) einen primärseitig mit dem Übertrager (20) verbundenen Komparator (24;V2) aufweist, der ausgangsseitig mit der Ansteuerschaltung (13) des Auslösers (4) verbunden ist.

6. Schutzschaltgerät nach einem der Ansprüche 1 bis 5, **dadurch gekennzeichnet, dass** die Auslöseschaltung (5) einen in die Primärwicklung (N1) des Übertragers (20) geschalteten ohm'schen Widerstand R5 ≥ 10kΩ aufweist.

7. Schutzschaltgerät nach einem der Ansprüche 1 bis 6, **dadurch gekennzeichnet, dass** die Auslöseschaltung (5) eine Referenzsignalquelle mit einem über eine Zenerdiode (D2) von einer Versorgungsspannung (Uᵥ) gespeisten Spannungsteiler (R7,R8) aufweist.

8. Schutzschaltgerät nach einem der Ansprüche 1 bis 7,**dadurch gekennzeichnet, dass** der Übertrager (20) sekundärseitig über eine Widerstands-Reihenschaltung (R11,R12) gegen Erdpotential (PE) geschaltet ist.

9. Schutzschaltgerät nach einem der Ansprüche 1 bis 8, **dadurch gekennzeichnet, dass** die Ansteuerschaltung einen Komparator (13) mit nachgeschaltetem, steuerbaren elektronischen Schalter (14) umfasst, der mit dem Auslöser (4) verbunden ist.

10. Schutzschaltgerät nach Anspruch 9, **dadurch gekennzeichnet, dass** der steuerbare Schalter ein Transistor (14) ist, dessen basisseitiger Steuereingang mit dem Komparator (13) verbunden ist, und in dessen Kollektor-Emitterkreis eine Auslöserelaisspule (15) des Auslösers (4) geschaltet ist.

## Claims

1. Protective switching device, in particular a differential current circuit breaker, having a core-balance transformer (6) which monitors a line network (Ln) and actuates a release (4) which, via a tripping circuit (2) and an actuation circuit (3), is coupled to a switch mechanism (16) in order to operate a power breaker (18), **characterised in that** a tripping circuit (5), which can be tripped by means of a remote tripping signal (S_{f}), is connected to a transformer (20) which can be actuated on the secondary side and whose primary side is connected to an actuation circuit (3) of the release (4) for remote tripping of the protective switching device.

2. Protective switching device according to Claim 1, **characterised in that**, if the secondary of the transformer (20) is short-circuited, the tripping circuit (5) produces a control signal (Sₛ) for the actuation circuit (13) of the release (4) .

3. Protective switching device according to Claim 1 or 2, **characterised in that** the tripping circuit (5) comprises an oscillator (22) which is connected to the primary side of the transformer (20).

4. Protective switching device according to Claim 3, **characterised in that** the oscillator (22) is a square-wave generator whose frequency (f) is set to between 500 Hz and 5 kHz.

5. Protective switching device according to one of Claims 1 to 4, **characterised in that** the tripping circuit (5) has a comparator (24;V2) which is connected on the primary side to the transformer (20) and is connected on the output side to the actuation circuit (13) of the release (4).

6. The protective switching device according to one of Claims 1 to 5, **characterised in that** the tripping circuit (5) has a non-reactive resistor R5 ≥ 10 kΩ which is connected to the primary winding (N1) of the transformer (20).

7. The protective switching device according to one of Claims 1 to 6, **characterised in that** the tripping circuit (5) has a reference signal source having a voltage divider (R7, R8) which is fed from a supply voltage (Uᵥ), via a zener diode (D2).

8. The protective switching device according to one of Claims 1 to 7, **characterised in that** secondary of the transformer (20) is connected to earth potential (PE) via a resistor series circuit (R11, R12).

9. The protective switching device according to one of Claims 1 to 8, **characterised in that** the actuation circuit comprises a comparator (13) with a downstream controllable electronic switch (14), which is connected to the release (4).

10. The protective switching device according to Claim 9, **characterised in that** the controllable switch is a transistor (14) whose base control input is connected to the comparator (13) and in whose collector-emitter circuit a tripping relay coil (15) of the release (4) is connected.

## Revendications

1. Disjoncteur de protection, notamment disjoncteur de protection à courant différentiel, avec un convertisseur de courant cumulé (6) qui surveille un réseau de distribution (Ln) et qui commande par l'intermédiaire d'un élément de déclenchement (2) et d'un circuit de commande (3) un déclencheur (4) couplé à un verrou de maintien (16) pour l'actionnement d'un interrupteur de puissance (18), **caractérisé par le fait qu'**un circuit de déclenchement (5) pouvant être déclenché au moyen d'un signal de déclenchement à distance (S_{f}) est relié à un transformateur (20) qui peut être commandé côté secondaire et qui est relié côté primaire à un circuit de commande (3) du déclencheur (4) pour le déclenchement à distance du disjoncteur.

2. Disjoncteur selon la revendication 1, **caractérisé par le fait que** le circuit de déclenchement (5) produit lors d'un court-circuit côté secondaire du transformateur (20) un signal de commande (S_{S}) pour le circuit de commande (13) du déclencheur (4).

3. Disjoncteur selon la revendication 1 ou 2, **caractérisé par le fait que** le circuit de déclenchement (5) comprend un oscillateur (22) relié au transformateur (20) côté primaire.

4. Disjoncteur selon la revendication 3, **caractérisé par le fait que** l'oscillateur (22) est un générateur rectangle dont la fréquence (f) est réglée entre 500 Hz et 5 kHz.

5. Disjoncteur selon l'une des revendications 1 à 4, **caractérisé par le fait que** le circuit de déclenchement (5) comporte un comparateur (24 ; V2) qui est relié au transformateur (20) côté primaire et qui est relié côté sortie au circuit de commande (13) du déclencheur (4).

6. Disjoncteur selon l'une des revendications 1 à 5, **caractérisé par le fait que** le circuit de déclenchement (5) comporte une résistance ohmique R5 ≥ 10 kΩ branchée dans l'enroulement primaire (N1) du transformateur (20).

7. Disjoncteur selon l'une des revendications 1 à 6, **caractérisé par le fait que** le circuit de déclenchement (5) comporte une source de signal de référence avec un diviseur de tension (R7, R8) alimenté par une tension d'alimentation (U_{V}) par l'intermédiaire d'une diode Zener (D2).

8. Disjoncteur selon l'une des revendications 1 à 7, **caractérisé par le fait que** le transformateur (20) est branché côté secondaire au potentiel terrestre (PE) par l'intermédiaire d'un circuit série de résistances (R11, R12).

9. Disjoncteur selon l'une des revendications 1 à 8, **caractérisé par le fait que** le circuit de commande comprend un comparateur (13) avec un interrupteur électronique (14) qui peut être commandé, branché du côté aval et relié au déclencheur (4).

10. Disjoncteur selon la revendication 9, **caractérisé par le fait que** l'interrupteur qui peut être commandé est un transistor (14) dont l'entrée de commande côté base est reliée au comparateur (13) et dans le circuit collecteur-émetteur duquel une bobine de relais déclencheur (15) du déclencheur (4) est branchée.
